# EUROPEAN PATENT SPECIFICATION

(11) **EP 3 063 776 B1**
(45) Date of publication and mention of the grant of the patent: **23.10.2019**
(21) Application number: 13802441.9
(22) Date of filing: 31.10.2013
(51) Int. Cl.: H01F 7/16, H02K 33/02, H02K 41/035

(54) **ELECTROMAGNETIC DRIVE AND METHOD OF PRODUCTION THEREOF**
ELEKTROMAGNETISCHER ANTRIEB UND VERFAHREN ZUR HERSTELLUNG DAVON
ENTRAÎNEMENT ÉLECTROMAGNÉTIQUE ET SON PROCÉDÉ DE FABRICATION

(30) Priority: 29.10.2013 PL 40582113
(43) Date of publication of application: 07.09.2016
(73) Proprietor: Centrum Badan Kosmicznych Polskiej Akademii Nauk, 00-716 Warszawa (PL)
(72) Inventor: GRYGORCZUK, Jerzy, PL-01-651 Warszawa (PL); WISNIEWSKI, Lukasz, PL-02-777 Warszawa (PL); DOBROWOLSKI, Marcin, PL-02-972 Warszawa (PL); KEDZIORA, Bartosz, PL-02-703 Warszawa (PL)
(74) Representative: Patpol Kancelaria Patentowa Sp. z o.o.
(86) International application number: PCT/IB2013/059811
(87) International publication number: WO 2015/063546

(56) References cited:
- GB-A- 2 107 935
- US-A- 4 366 401
- US-A- 4 746 887

## Description

### Technical field

The object of the invention is an electromagnetic drive and a method of producing of electromagnetic drive. In particular, the object of the invention is an electromagnetic drive for a penetrator for applications in space objects exploration and a method of producing of such drive.

### Background art

Analysing the soil of space objects, like comets, asteroids or planets, often requires penetration into the object. For this purpose penetrators are used. A penetrator can be equipped with its own drive, then it is described as a self-driven hammering penetrator, or can be hammered by means of an external device.

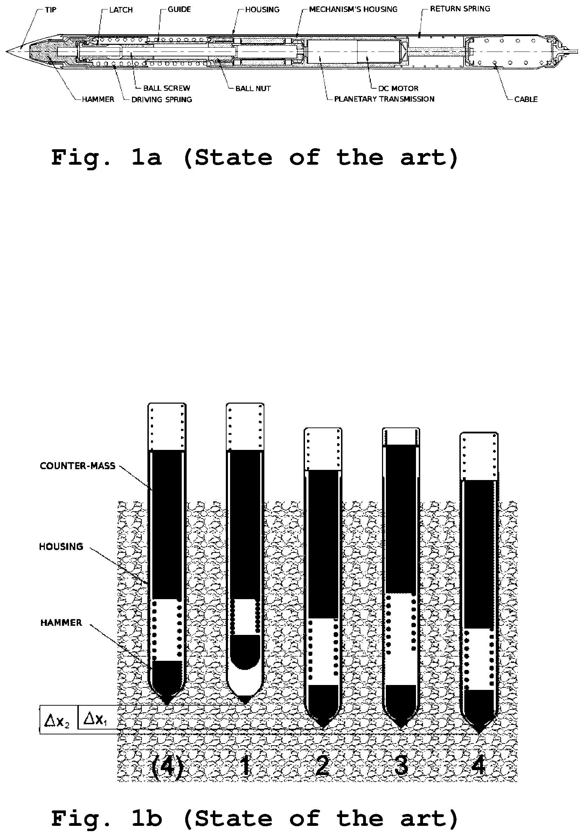

An example of a self-driven hammering penetrator has been disclosed in a paper by J. Grygorczuk, K. Seweryn, R. Wawrzaszek, M. Banaszkiewicz and T. Rybus, entitled "Eksploracja warstw podpowierzchniowych ksi 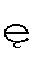 życa z wykorzystaniem penetratora KRET", Wiertnictwo Nafta Gaz, tom 26, zeszyt 1-2, 2009 and is shown in Fig. 1a.

The self-driving principle of this mechanical penetrator is based on mutual, dynamic interaction of three masses: the mass of the driven housing, the mass of the hammer and an inertial counter-mass. Necessary for operation is also a driving spring and a return spring. The principle of operation has been shown in Fig. 1b, where four phases have been distinguished. In phase 1 the hammer moves, and the driving spring becomes compressed. In phase 2 the released hammer accelerates and hits the housing. At the hit, due to exchange of energy and momentum, the mole's housing sinks by Δx₁. At the same time, the counter-mass moves in the opposite direction. In phase 3 the counter-mass reaches the highest position. The housing does not move upwards, because its movement resistance is greater than the force of the return spring. In the last phase 4 the counter-mass accelerated by the force of the return spring hits the housing, what results in an additional sinking. Eventually, after a full operation cycle the increase in depth is Δx₂.

An example of a penetrator hammered by means of an external device has been disclosed in a paper by J. Grygorczuk, M. Banaszkiewicz, K. Seweryn and T. Spohn, "MUPUS insertion device for the Rosetta mission", Journal of Telecommunications and Information Technology, 1/2007.

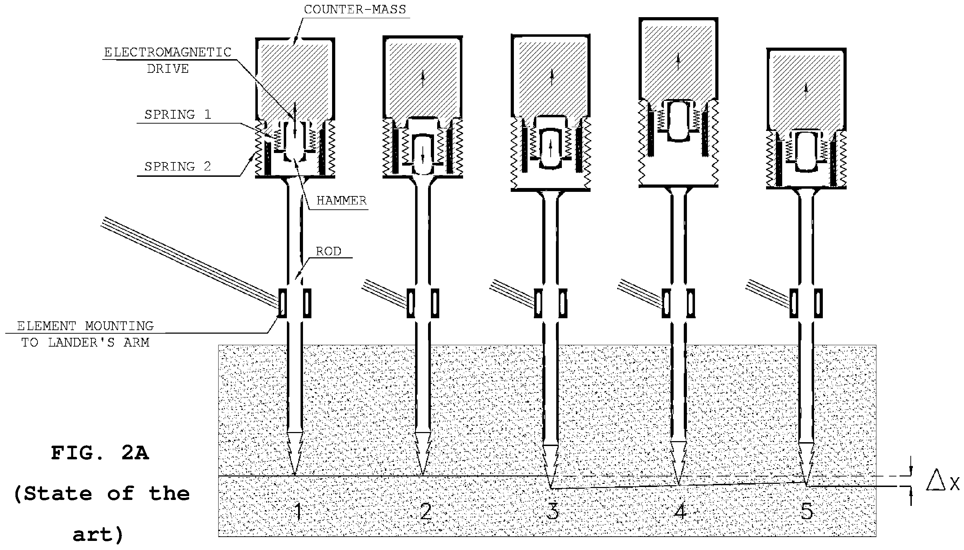

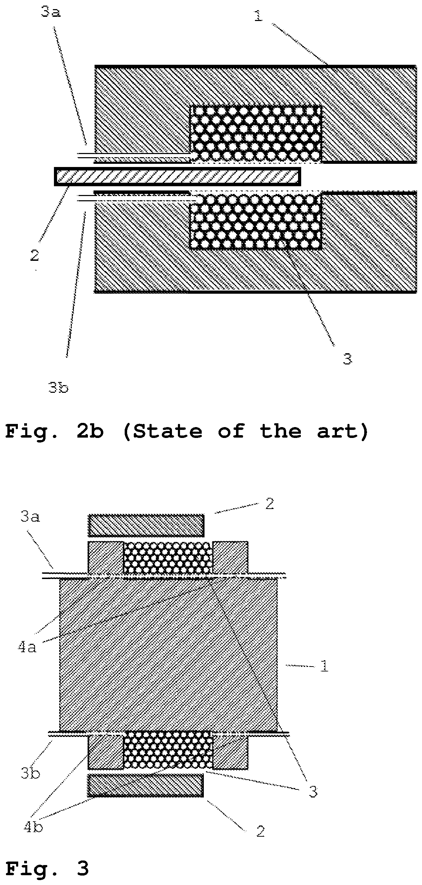

To a cylindrical-shaped elongated penetrating device equipped on the operational end with a penetrating tip or a container, on the opposite end there has been connected an electromagnetic drive delivering energy hammering this device into the penetrated object, as shown in Fig. 2a. The energy is delivered by a hit with a massive element, so-called hammer, applied to the free end. The hammer is driven by means of an electromagnet wound on a core with moveable internal portion. The electromagnet core's shape in longitudinal section resembles the letter "C" arranged in opposite to its mirror reflection, as shown in Fig. 2b. This what in the longitudinal section is represented as a gap between the letter "C" and its mirror reflection is in fact an opening drilled along the axis of the electromagnet's core. The electromagnet's winding is surrounded by a core, but from the inside the core is open. In the said axial opening there is positioned an element made of ferromagnetic material mounted on a spring, so that it is only partially inserted in the opening. A current flow through the winding results then in an electromagnetic force, tending to close the core, so that a possibly large portion of the magnetic field is enclosed within the core. The moveable element of the core is abruptly "pulled" inside the core, accelerating the hammer. When the current stops flowing, the spring displaces from the initial position the moveable element of the core and the hammer. Thus, switching the current flow on and off multiple times it is possible to achieve an effect analogous to driving the penetrator into the ground with a hammer. Such solution has been applied, for example, in penetrator MUPUS sent in space mission Rosetta.

Alternatively, instead of using a spring it is possible to use a permanently magnetized moveable element of the core. Then, by changing the direction of the current flow it is possible to move the moveable element of the core in both directions.

In many cases permanent magnets are not allowed, because presence of a permanent magnet disturbs the readout of certain measurement devices.

One of advantages of the presented self-driven hammering penetrator is the possibility of penetrating to a depth exceeding its length multiple times. The above-described penetrator hammered by means of an external device lacks this advantage. However, its advantage is the electromagnetic drive providing simplicity of structure and reliability of operation.

US4366401 discloses an electromagnetic device that includes a stator having axially spaced pole pieces and windings which when energized cause adjacent pole pieces to have opposite magnetic polarity. An armature surrounds the stator and is of tubular form having a smooth internal surface. The exterior surface of the armature is machined such that at least at one end of the pole pitch distance of the stator the thickness of the armature is such that magnetic saturation of the material forming the armature occurs so that the lines of force between the armature and the pole piece extend in a direction inclined to the axis of the armature thereby resulting in a force acting to cause axial movement of the armature.

US 4746887 discloses an electromagnetic actuator assembly comprising a fixed body having electric coil means for generating a magnetic field mounted thereon and including a plurality of magnetic yoke members each carrying an electrical coil. The actuator further comprises a hollow cylindrical movable body adapted to be slidable over said fixed body including a plurality of hollow cylindrical magnetic members interposed with a plurality of hollow cylindrical nonmagnetic members. Hollow cylindrical movable body has a wall thickness that is substantially 1 mm to effect a high speed kinetic response to the generation of a magnetic field by said coil means. Excitation coils are connected parallel to each other to reduce the coil inductance for increasing the magnetic forces to attract the movable body and the response thereof.

GB2107935 discloses a stator structure for electromagnetic device which includes a hollow armature surrounding the stator structure. Stator structure includes a core of cylindrical form having a plurality of circumferential grooves defined therein connected with radial slots for passing the wire of winding.

For a person skilled in the art it is evident that application of an electromagnetic drive in a self-driven hammering penetrator could be very advantageous due to a significant simplification of the internal structure. The shape and size of the penetrator make this task very difficult. A penetrator has to be of elongated shape to limit the resistance for hammering into the ground. Thus, its cross-sectional size has to be small in comparison to its length. As a consequence, the hammering electromagnetic drive enclosed within the penetrator's cross-section has to be of a small cross-section as well. Such drive could not deliver sufficient amount of energy for effective hammering. Solving this problem is the object of the present invention.

### Summary of the invention

A person skilled in the field of electromagnetic drives would solve the problem of insufficient energy of the drive by increasing the number of turns and consequently also the size of the core. In the present invention there is proposed a multi-sectional drive, in which the energy transferred to the hammer is the a superposition of the energies delivered to a number of serially arranged sections with windings. Such solution is in fact counter the typical practices known in the state of the art, but constitutes a solution of the problem presented above.

The stated problem can be solved by providing an electromagnetic drive comprising a core composed of at least two partially open sections. Each section surrounds partially the winding and is closed by a closing element moveably connected to the core. The element is arranged so that in conditions of no current flow through the winding the core is only partially closed. The closing elements are arranged outside the core and the winding and are connected to each other by a separating element made of material with lower magnetic permeability.

Preferably, the electrical connection of windings in sections of the core runs in grooves on the core. Preferably, the closing elements contain iron, which has a high magnetic permeability µ. Preferably, the material with lower magnetic permeability of which the separating element is made, is chosen such that is is an electrical insulator. These could be carbon fibres. Alternatively, it can be an electrical conductor with lower magnetic permeability, in which gaps interrupting the flow of eddy currents are provided. An example of such conductor is aluminium.

Preferably, the core, closing elements and the separating element show axial symmetry along the same axis. Preferably, the core encompassed six sections and is surrounded by a hammer encompassing six closing elements, five separating elements and closed at one end with a beater. Preferably the separation of sections of the core has length corresponding to the length of a section and furthermore the length of the closing element corresponds to the length of section's opening and the length of the separating element corresponds to the length of separation of sections.

The object of the invention can be achieved by using a method of producing of electromagnetic drive comprising a partially open core, a winding and a moveable portion of the core, in which the core is produced of at least two partially open sections and grooves adapted to accommodate the wire connecting the windings between sections are provided in the core. The winding is wound continuously, with a single section of wire, guiding the wire between the sections in the grooves. The core is surrounded with a moveable hammer made of alternately arranged closing elements made of material with a high magnetic permeability and separating elements made of material with lower magnetic permeability, wherein the hammer is mounted to the core by means of intermediate means adapted to energy storing so that in conditions of no current flow in the winding the open sections of the core are only partially closed by the closing elements. Preferably, the means adapted to energy storing are constituted by an elastic element.

### Short description of figures

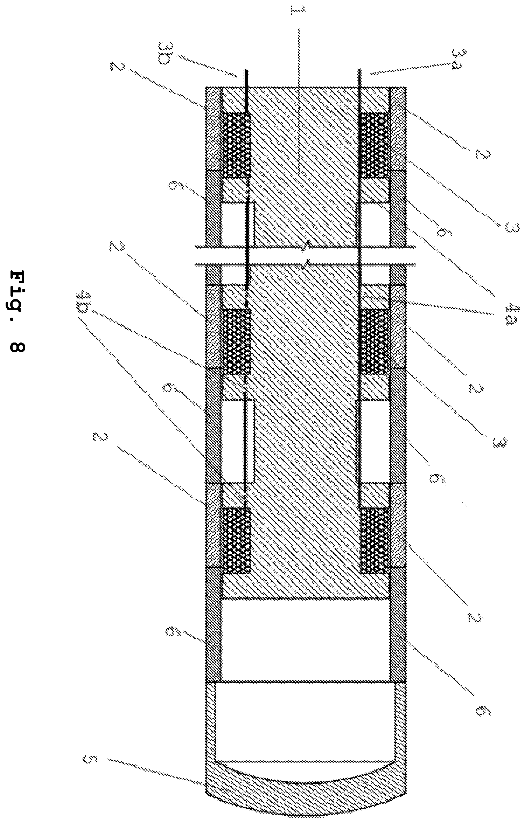

The object of the invention has been shown in embodiments in drawings, where Fig. 1a shows schematically a longitudinal section of the self-driven hammering penetrator known in the state of the art, Fig. 1b shows schematically in four phases the operating cycle of the self-driven hammering penetrator known in the state of the art, Fig. 2a shows schematically the operating cycle of the penetrator hammered by means of an external electromagnetic drive known in the state of the art, Fig. 2b is a longitudinal section of the electromagnetic drive for the hammered penetrator known in the state of the art, Fig. 3 is a longitudinal section of a single section of the drive according to the invention, Fig. 4 is the longitudinal section of the core of the drive according to the invention, Fig. 5 is a cross-section of the core with the winding according to the invention, Fig. 6 is a perspective view of the core with the winding according to the invention, Fig. 7 is a perspective view of the hammer of the self-driven hammering penetrator driven by the drive according to the invention, and Fig. 8 is a longitudinal section of the multi-sectional electromagnetic drive according to the invention.

### Description of embodiments

The penetrating capability of a self-driven hammering penetrator depends first of all on the energy of hitting by the hammer and cross-section of the hammered housing. The shape of the tip and the penetrator's length are also significant. Further there is described a penetrator with diameter of 25.4 mm, with the drive according to the invention. During the operational cycle of the self-driven hammered penetrator a part of energy is transferred in the direction of hammering, and a part in the opposite direction, disadvantageous for the operation, according to the conservation of momentum law. A significant parameter influencing a high efficiency of energy transfer in the hammering direction are proportions of three masses: of the penetrator's housing, of the hammer and of the counter-mass. The mass of the hammer should be relatively small in comparison with the mass of the counter-mass to gain the most energy during acceleration. On the other hand, the mass of the hitting hammer cannot be too small in comparison with the mass of the housing, because a not optimal transfer of energy and recoil will occur. Assuming the limit of mass of the whole device as 0.8 kg, the above problem has been solved as follows:
a. A housing with weight of 60 g has been used, using a carbon fibre composite tube and a hardened titanium tip. The combination of these different materials has to be very durable, because during the hammer hits great overloads are generated - in excess 10000 g.
b. A counter-mass with the weight of 600 g has been constructed. For this purpose it was necessary to apply additional elements made of material with a high specific weight. A proper selection turned out to be a workable alloy of tungsten with specific weight 18.1 g/cm², which can be machined with hard carbides.
c. A hammer has been used with mass two times greater than the housing mass: 120 g.

The mass of the whole penetrator reached 780 g. Approximately, for the three masses: of the hammered housing, of the hammer and of the counter-mass, there has been obtained the proportion of: 1:2:5.

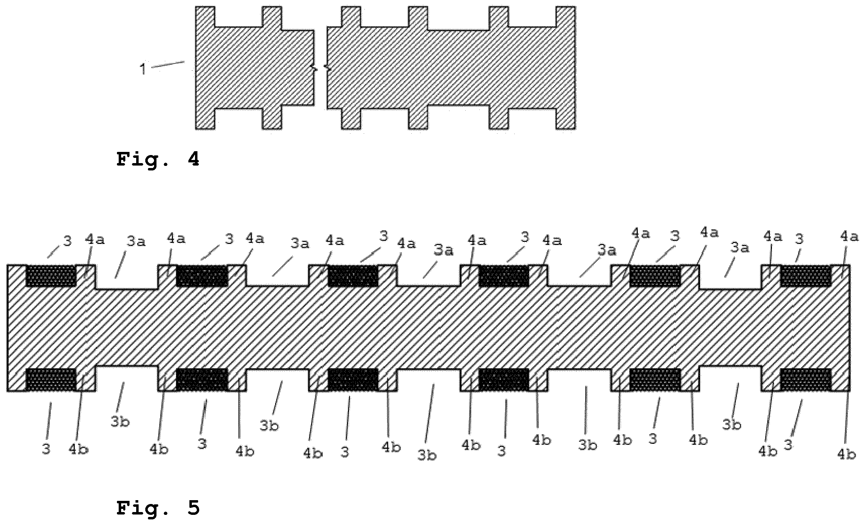

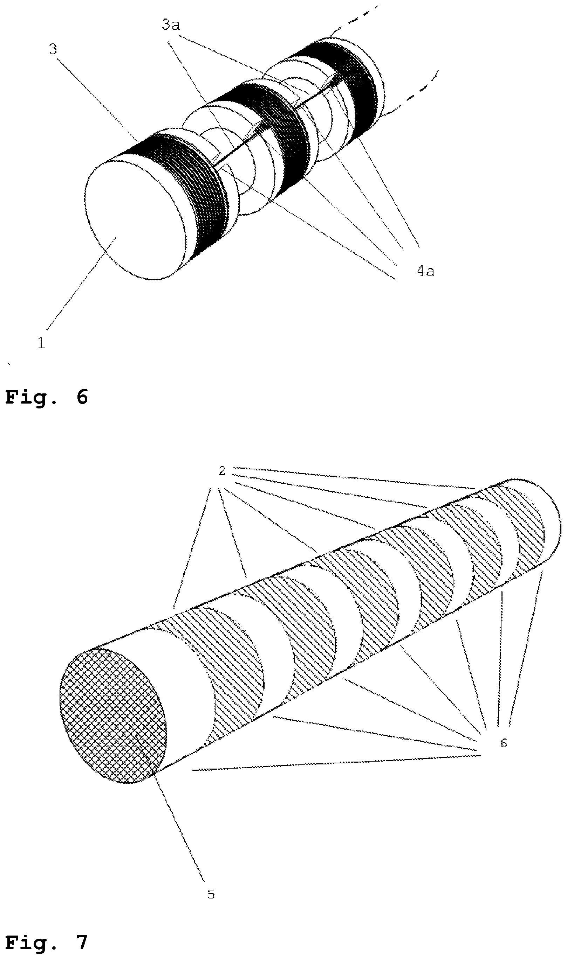

The electromagnetic drive was fully integrated with the remaining parts of the penetrator. The drive energy in each cycle was ca. 2 J. The core 1 with the winding, shown in Fig. 5, is the element connected to the counter-mass, while the hammer, shown in Fig. 6, surrounds and closes from the outside the core with the winding. The hammer has been made of alternately arranged closing elements 2 in form of rings of material having a high magnetic permeability and separating elements 6 in form of rings of carbon fibre. A rigid connection of closing elements 2 and substantially identical arrangement in relation to corresponding core sections cause, that all of them are simultaneously subjected to operation of forces induced by the current flow in the sections and the force displacing the hammer results from these forces. The closing elements 2 have been made of iron, because of its high magnetic permeability. The separating elements 6 have been made of carbon fibres, which combine good mechanical properties and impact resistance with electromagnetic properties required for their functions. That is because the material of the separating elements 6 has to have magnetic permeability µ significantly lower than the material of closing elements 2. Carbon fibres have significantly lower magnetic permeability than iron. Additionally, they are electrical insulators, therefore eddy currents are not induced in them. It is possible to replace them with plastics or other material with low magnetic permeability. The separating elements can be also made of conductive materials, but then gaps should be provided in them that would interrupt loops of eddy currents.

In the present embodiment, the core 1 shown in Fig. 4 has been used in the drive according to the invention. The total length of the core was 138 mm. The core comprises 6 sections separated with pieces of core without the winding. A single section in longitudinal section resembles the letter "H". This shape provides the possibility of winding the winding 3 easily on the central portion of each section. The core with the winding is shown in Fig. 5.

Connections 3a, 3b of windings 3 in respective sections have been provided without cutting the winding wire, guiding it through canals 4a and 4b provided in the core. These canals not only accommodate the wire, but additionally contribute mitigation of the eddy currents in the core. Because of that, the core is open to the outside, the winding can be wound easily on each of the core's sections applying only insulting material preventing short circuit through the core. Moreover, the canals 4a, 4b between the sections can be provided in form of grooves in section's side walls. Because of that, the windings in subsequent sections can be wound not cutting the wire and just inserting it from the outside to the canals. It is possible thereby to wind all the windings in all the sections with a single piece of wire. It is sufficient to start winding from the side where eventually finishing leads are to be located, guide the connections through canals 4a along the whole length of the core and the wind the winding in subsequent sections, passing the wire through canals 4b and returning to the place where the finishing leads are to be located. The connections 3a, 3b can be also guided through the same canal. However, providing two independent canals allows to better interrupt the eddy currents in the core.

The hammer composed of closing elements 2 and separating elements 6 surrounds the core from the outside and from the side intended for hitting it is closed with a beater 5. The finishing leads of windings 3 are located on the opposite side. The hammer and the counter-mass, with the core 1 being its portion, are driven by means of electromagnetic energy and connected by means of the return spring. In the equilibrium position, with no current flow through the windings 3, the closing elements have to partially close the core leaving a relatively small gap, which can be closed by displacing the hammer from the equilibrium position. Position of the closing element 2 in relation to the section of the core 1 being closed is shown in Fig. 3. Comparison of Fig. 2 and Fig. 3 also allows to notice a significant advantage of the core according to the invention over a typical, known in the state of the art, series connection of electromagnetic drives. The drive known in the state of the art is shown in Fig. 2b. In such drives, inside the core 1 the winding 3 is located after winding on a carcass (not shown in the figure), for this purpose the core has to be composed of two portions, which connect only after the winding has been wound. Moreover, the finishing leads of the coil can be led outside the core only through openings in the core. In such configuration it is not possible to build a multi-sectional drive with the winding wound with one piece of wire.

Using six sections allowed to provide the required energy of ca. 2 J of the drive accommodated in a penetrator with diameter of 25.4 mm. The optimal number of sections is six. A part of the space inside the penetrator is occupied by measurement instruments.

Typically, connections between the hammer, the counter-mass and the housing are elastic. Because of that, after the hit these three objects return to the equilibrium position. Alternative for elastic connections can be other connections, which allow to absorb and store energy. These include connections with a swing-wheel and also electric circuits charging a capacitor by enforced movement in one direction and discharging enforcing movement in the opposite direction. Such solutions as alternative for springs have been disclosed at a conference and in the paper entitled "Advanced penetrators and hammering sampling devices for planetary body exploration", 11th Symposium on Advanced Space Technologies in Robotics and Automation-ASTRA 12-14 April, ESA/ESTEC, Noordwijk.

For a person skilled in the art it is evident, that the invention can be realized not only by using axially symmetrical core, but also cores with any cross-sections matching particular application or manufacturing process. These can be cores with polygonal, rectangular, triangular or elliptic cross-sections. Cross-section of a section can be substantially different from cross-section of the core between sections.

Electromagnetic drives according to the invention can be used in numerous applications not related to penetrators, in which the cross-sectional size of the drive are subject to stronger constraints then the length. In the view of this documentation, selection of the number of sections and a proper shape will be apparent for a person skilled in the art. The presented embodiments do not limit in any way the scope of protection defined in the patent claims.

## Claims

1. Electromagnetic drive for a penetrator comprising a core having at least two partially open sections, each of them partially surrounding a winding positioned inside said partially open sections, and each of the open sections is being closed by a closing element moveably connected to the core and arranged so that in conditions of no current flow the open core sections are only partially closed, wherein the closing elements (2) are arranged outside of the core and the winding and wherein said closing elements (2) are connected to each other by a separating element (6) made of material having lower magnetic permeability, forming together a body of a hammer closed with a beater (5) at one end so that in condition of current flowing in the winding electromagnetic force is exerted to the closing elements (2) to move them into the position in which they close the open sections of the core in which the windings are positioned and in which magnetic flux generated by the flow of the current is encompassed and thus cause movement of the hammer they are integrated with, wherein
a separation between adjacent open sections in which the windings are positioned corresponds to the length of the open section, and the length of said separating element (6) corresponds to the separation between the open sections having windings positioned therein.

2. Drive according to claim 1, wherein the electrical connection of windings which are positioned (3a, 3b) in the open sections of the core runs through grooves (4a, 4b) in the core (1).

3. Drive according to claim 1 or 2, wherein the closing elements (2) contain iron.

4. Drive according to claim 1 or 2, or 3, wherein the material having lower magnetic permeability, from which the separating element (6) is made, is additionally an electric insulator.

5. Drive according to claim 4, wherein the electric insulator are carbon fibres.

6. Drive according to claim 1 or 2, or 3, wherein the material having lower magnetic permeability (6) is an electrical conductor, in which gaps interrupting the flow of eddy currents have been provided.

7. Drive according to any of the preceding claim, wherein the core (1), closing elements (2) and the separating element (6) have axial symmetry along the same axis.

8. Drive according to any of the preceding claims, wherein the core encompassed six sections.

9. A method of producing of an electromagnetic drive comprising a partially open core, a winding and a moveable portion of the core, wherein the core is produced of at least two partially open sections with separation between sections corresponding to the length of the sections, grooves adapted to accommodate the winding wire between sections are provided therein, the winding is wound, guiding the wire between sections in the grooves in a continuous and uninterrupted manner and the core (1) is surrounded by a moveable hammer produced of alternately arranged closing elements (2) made of material having a high magnetic permeability and separating elements (6) made of material having lower magnetic permeability, wherein the hammer has a beater (5) on its one end, wherein the hammer is mounted to the core (1) by means of means adapted to storing energy, so that in conditions of no flow of the current through winding the open sections of the core (1) are only partially closed by the closing elements (2).

10. The method according to claim 14, wherein the means adapted to energy storing is an elastic element.

## Patentansprüche

1. Elektromagnetischer Antrieb für einen Eindringkörper mit einem Kern, der mindestens zwei teilweise offene Abschnitte aufweist, die jeweils teilweise eine innerhalb der teilweise offenen Abschnitte angeordnete Wicklung umgeben, wobei jeder offene Abschnitt durch ein mit dem Kern beweglich verbundenes Schließelement geschlossen und so angeordnet wird, dass die offenen Kernabschnitte bei fehlender Stromversorgung nur teilweise geschlossen sind, wobei die Schließelemente (2) außerhalb des Kerns und der Wicklung angeordnet sind und die Schließelemente (2) miteinander durch ein Trennelement (6) aus einem Material mit geringerer magnetischer Permeabilität verbunden sind, und insgesamt einen Hammerkörper bilden, der mit einem Schlägel (5) an einem Ende versehen ist, so dass bei vorhandener Stromversorgung der Wicklung eine elektromagnetische Kraft auf die Schließelemente (2) wirkt, um sie in die Position zu bringen, in der sie die offenen Kernabschnitte, in denen die Wicklungen positioniert sind, verschließen und in der das durch den Stromfluss erzeugte magnetische Feld erfasst ist und somit eine Bewegung des Hammers bewirken, mit dem sie integriert sind, wobei die Trennung zwischen den benachbarten offenen Abschnitten, in denen die Wicklungen positioniert sind, der Länge des offenen Abschnitts entspricht und die Länge des genannten Trennelements (6) der Trennung zwischen den offenen Abschnitten mit den darin angeordneten Wicklungen entspricht.

2. Antrieb nach Anspruch 1, wobei die elektrische Verbindung von Wicklungen, die in den offenen Abschnitten des Kerns (3a, 3b) positioniert sind, durch die Nuten (4a, 4b) im Kern (1) verläuft.

3. Antrieb nach Anspruch 1 oder 2, wobei die Schließelemente (2) Eisen enthalten.

4. Antrieb nach Anspruch 1 oder 2 oder 3, wobei das Material mit geringerer magnetischer Permeabilität, aus dem das Trennelement (6) hergestellt wurde, zusätzlich ein elektrischer Isolator ist.

5. Antrieb nach Anspruch 4, wobei der elektrische Isolator aus Kohlenstofffasern ausgeführt ist.

6. Antrieb nach Anspruch 1 oder 2 oder 3, wobei das Material mit geringerer magnetischer Permeabilität (6) ein elektrischer Leiter ist, in dem Spalten vorgesehen sind, die den Fluss der Wirbelströme unterbrechen.

7. Antrieb nach einem der vorstehenden Ansprüche, wobei der Kern (1), die Schließelemente (2) und das Trennelement (6) eine Axialsymmetrie entlang derselben Achse aufweisen.

8. Antrieb nach einem der vorhergehenden Ansprüche, wobei der Kern sechs Abschnitte umfasst.

9. Verfahren zur Herstellung eines elektromagnetischen Antriebs, der einen teilweise offenen Kern, eine Wicklung und einen beweglichen Kernabschnitt aufweist, wobei der Kern mindestens aus zwei teilweise offenen Abschnitten mit einem Trennelement zwischen den Abschnitten entsprechend der Länge der Abschnitte ausgeführt ist, darin sind Nuten vorgesehen, die zur Aufnahme des Wickeldrahts zwischen den Abschnitten bestimmt sind, die Wicklung wird gewickelt und führt den Draht zwischen den Abschnitten in den Nuten kontinuierlich und ununterbrochen und der Kern (1) ist von einem beweglichen Hammer umgeben, der aus abwechselnd angeordneten Schließelementen (2) aus einem Material mit hoher magnetischer Permeabilität und Trennelementen (6) aus Material mit geringerer magnetischer Permeabilität besteht, wobei der Hammer an seinem einen Ende einen Schlägel (5) aufweist, wobei der Hammer am Kern (1) mit Mitteln befestigt ist, die zur Energiespeicherung vorgesehen sind, so dass die offenen Abschnitte des Kerns (1) durch die Schließelemente (2) nur teilweise geschlossen sind, wenn kein Strom durch die Windungen fließt.

10. Verfahren nach Anspruch 14, wobei das zur Energiespeicherung vorgesehene Mittel ein elastisches Element ist.

## Revendications

1. Propulsion électromagnétique pour un pénétrateur comprenant un noyau ayant au moins deux sections partiellement ouvertes, chacune d'elles entourant partiellement un enroulement positionné à l'intérieur desdites sections partiellement ouvertes, et chacune des sections ouvertes étant fermée par un élément de fermeture relié de manière mobile au noyau et agencé de manière à ce qu'en l'absence de courant, les sections ouvertes du noyau ne soient que partiellement fermées, dans lequel les éléments de fermeture (2) sont disposés à l'extérieur du noyau et de l'enroulement et dans lequel lesdits éléments de fermeture (2) sont reliés l'un à l'autre par un élément de séparation (6) constitué d'un matériau ayant une perméabilité magnétique inférieure, formant ensemble un corps de marteau fermé avec un batteur (5) à une extrémité, de sorte qu'en cas de courant circulant dans l'enroulement, une force électromagnétique est exercée sur les éléments de fermeture (2) qui sont entraînés pour être amenés dans la position dans laquelle ils ferment les sections ouvertes du noyau dans lesquelles les enroulements sont positionnés et dans lesquelles le flux magnétique généré par le flux du courant est englobé et provoque ainsi le mouvement du marteau avec lequel ils sont intégrés, dans lequel une séparation entre des sections ouvertes adjacentes dans lesquelles les enroulements sont positionnés correspond à la longueur de la section ouverte, et la longueur dudit élément de séparation (6) correspond à la séparation entre les sections ouvertes dans lesquelles des enroulements sont positionnés.

2. Propulsion selon la revendication 1 dans laquelle la connexion électrique des enroulements qui sont positionnés (3a, 3b) dans les sections ouvertes du noyau passe par des rainures (4a, 4b) dans le noyau (1).

3. Propulsion selon la revendication 1 ou 2 dans laquelle les éléments de fermeture (2) contiennent du fer.

4. Propulsion selon la revendication 1 ou 2 ou 3 dans laquelle le matériau ayant une perméabilité magnétique inférieure, constituant l'élément de séparation (6), est en outre un isolant électrique.

5. Propulsion selon la revendication 4 dans laquelle les isolants électriques sont des fibres de carbone.

6. Propulsion selon la revendication 1 ou 2 ou 3 dans laquelle le matériau ayant une perméabilité magnétique inférieure (6) est un conducteur électrique dans lequel sont prévus des intervalles interrompant le flux de courants de Foucault.

7. Propulsion selon l'une quelconque des revendications précédentes dans laquelle le noyau (1), les éléments de fermeture (2) et l'élément de séparation (6) présentent une symétrie axiale le long du même axe.

8. Propulsion selon l'une quelconque des revendications précédentes dans laquelle le noyau comprend six sections.

9. Procédé de fabrication d'une propulsion électromagnétique comprenant un noyau partiellement ouvert, un enroulement et une partie mobile du noyau, dans lequel le noyau est formé d'au moins deux sections partiellement ouvertes avec une séparation entre les sections correspondant à la longueur des sections, des rainures adaptées pour loger le fil d'enroulement entre les sections sont prévues dans celle-ci, l'enroulement est enroulé, guidant le fil entre les sections dans les rainures de manière continue et ininterrompue et le noyau (1) est entouré par un marteau mobile constitué d'éléments de fermeture (2) disposés de manière alternée, en matériau à forte perméabilité magnétique, et d'éléments de séparation (6) en matériau à perméabilité magnétique inférieure, dans lequel le marteau a un batteur (5) à une extrémité, dans lequel le marteau est monté sur le noyau (1) au moyen d'un moyen adapté pour stocker de l'énergie, de sorte que, dans des conditions d'absence de flux du courant à travers l'enroulement, les sections ouvertes du noyau (1) ne sont que partiellement fermées par les éléments de fermeture (2).

10. Procédé selon la revendication 14, dans lequel le moyen adapté au stockage d'énergie est un élément élastique.
